# EUROPÄISCHE PATENTSCHRIFT

(11) **EP 1 144 340 B1**
(45) Veröffentlichungstag und Bekanntmachung des Hinweises auf die Patenterteilung: **02.07.2008**
(21) Anmeldenummer: 99964350.5
(22) Anmeldetag: 20.11.1999
(51) Int. Cl.: C04B 41/00

(54) **MATERIAL ZUM ABDICHTEN PORÖSER BAUFLÄCHEN**
MATERIAL FOR SEALING POROUS CONSTRUCTION SURFACES
MATERIAU POUR ETANCHEIFIER DES SURFACES DE CONSTRUCTION POREUSES

(30) Priorität: 15.12.1998 DE 19857743
(43) Veröffentlichungstag der Anmeldung: 17.10.2001
(73) Patentinhaber: SOTANO Baustofftechnologie GmbH, 58675 Hemer (DE)
(72) Erfinder: SCHEPPER, Wilhelm, D-58675 Hemer (DE); SCHEPPER, Andreas, D-58675 Hemer (DE)
(74) Vertreter: Dörner, Lothar
(86) Internationale Anmeldenummer: PCT/DE1999/003700
(87) Internationale Veröffentlichungsnummer: WO 2000/035832

(56) Entgegenhaltungen:
- EP-A- 0 320 375
- WO-A-91/07362
- AT-B- 379 363
- DE-A- 2 727 615
- DE-B- 1 671 172
- FR-A- 2 539 788
- GB-A- 2 093 818

## Beschreibung

Materialien zum Aufbringen auf Bauflächen, mit deren Hilfe die Bauflächen gegen Feuchtigkeit abgedichtet werden sollen, sind in vielfältiger Form bekannt. So ist es beispielsweise möglich, auf die abzudichtende Baufläche eine Folie aufzubringen. Auch das Aufbringen von Bitumen auf die Baufläche ermöglicht die Abdichtung gegen Feuchtigkeit.

Darüber hinaus besteht die Möglichkeit, sogenannte Oberflächen-Dichtungsmittel einzusetzen. Hierzu ist ein Verfahren bekannt, bei dem Alkalisilikate auf die abzudichtende Baufläche aufgetragen werden. Es hat sich jedoch gezeigt, dass diese Verfahren insbesondere beim Vorhandensein von größeren Lunker- und Kiesnestern in der abzudichtenden Baufläche versagen. Darüber hinaus können die Silikate Ausblühungen - das sind Salzausscheidungen aus dem Mauerwerk - erzeugen. Darüber hinaus ist die Verwendung von alkalischen Siliciumverbindungen zum Verschließen der Oberflächenporen der abzudichtenden Baufläche bekannt. Diese Art der Oberflächenabdichtung erfordert einen feuchten, griffigen Untergrund und einen Schutz gegen zu schnelle Austrocknung. Durch die zu schnelle Austrocknung verbrennt der Putz, wodurch ihm das zum Abbinden des Putzes benötigte Anmachwasser zu schnell entzogen wird. Der Putz verliert dabei seine Festigkeit, wodurch Hohlräume und Schwindrisse entstehen können. Durch ein zu fettes Mischungsverhältnis, das heißt Verwendung von zu vielem Bindemittel "Zement", wird der Putz zu hart, sodass Querspannungen zwischen dem Untergrund und dem Putz auftreten. Hierdurch können Risse und Hohlräume entstehen, die dann zu Ablösungen des Putzes führen.

Weiterhin ist es bekannt, Dispersionen auf Bitumen-Kautschukbasis auf die abzudichtenden Bauflächen aufzutragen. Diese Dispersionen können zwar auch auf feuchtem Untergrund aufgetragen werden. Sie weisen jedoch den Nachteil auf, daß vorhandene größere Poren und Lunker durch Luftpolster aufplatzen können und rückverdampfende Feuchtigkeit zur Blasenbildung auf der Wand führt.

Hier will die Erfindung Abhilfe schaffen. Der Erfindung liegt die Aufgabe zugrunde, einen atmungsaktiven wassersperrenden Putz zu schaffen. Gemäß der Erfindung wird diese Aufgabe mit den Merkmalen des Patentanspruchs 1 gelöst.

Als Putz wird im allgemeinen ein Wand- oder Deckenüberzug bezeichnet, der zum Schutz gegen Witterungs-, chemische und mechanische Einflüsse sowie zur Erzielung bestimmter Oberflächenwirkungen dient. Nach bauphysikalischen Eigenschaften kann Putz eingeteilt werden in wasserabweisenden, wassersperrenden, schallschluckenden und feuerfesten Putz.

Mit der Erfindung ist ein atmungsaktiver Putz herstellbar, der im Gegensatz zum Stand der Technik nicht nur wasserabweisend (hydrophobierend), sondern wassersperrend ist. Die wassersperrende Wirkung beruht im Wesentlichen auf der Zusammensetzung einer Mischung und der gezielten Kombination von Metallseife, Luftporenbildner und einer Mineralstoffmischung. Der Luftporenbildner bewirkt dabei einen hohen Luftgehalt im Putz. Bevorzugt ist der Luftporenbildner Olefinsulfonat. Die Mischung, auch als hydrophobierendes Pulver bezeichenbar, durchsetzt den Putz annähernd gleichmäßig. Der Putz bleibt porig. Die Hydrophobierung durchsetzt den Putz gänzlich. Somit ist der Putz mit Hilfe der Mischung wasserabweisend, bleibt jedoch atmungsaktiv und ist bis 1,5 bar wasserdruckdicht.

In Ausgestaltung der Erfindung ist als Sand Rheinsand und/oder Putzsand verwendbar. Durch Verwendung der unterschiedlichen Sande ist die Anpassung des Materials an die abzudichtende Baufläche gut möglich. Darüber hinaus kann durch die Verwendung unterschiedlicher Sande oder die Mischung der genannten Sande das Preisniveau des Materials verändert werden.

Vorteilhafte Ausgestaltungen und Weiterbildungen sind in den übrigen Unteransprüchen angegeben. Ein Ausführungsbeispiel der Erfindung ist nachfolgend im Einzelnen beschrieben.

Das Material zum Abdichten poröser Bauflächen gegen Feuchtigkeit liegt in Form eines Putzes vor. Es besteht aus einer Zusammensetzung verschiedener Stoffe. Hauptbestandteil der Zusammensetzung ist Sand. Er macht ungefähr 4/5 des Gewichts der Zusammensetzung aus. Als Sand kann dabei Putzsand alleine verwendet werden. Jedoch ist auch die Kombination von Putzsand und Rheinsand möglich. Sehr gute Ergebnisse werden erzielt bei einer Zusammensetzung des Sandes von zwei Anteilen Rheinsand zu einem Teil Putzsand.

Weiterer Bestandteil der Zusammensetzung ist Zement. Der Zement macht ungefähr 1/5 des Gesamtgewichts der Zusammensetzung aus. Die Verwendung von weißem Zement ist möglich. Der Zement bewirkt unter Wasseraufnahme an Luft ein Aushärten des Putzes. Es handelt sich dabei um ein hochhydraulisches Bindemittel. Im Ausführungsbeispiel ist als Zement Portlandzement verwendet.

Weiterer Bestandteil in der Zusammensetzung ist Kalkhydrat. Kalkhydrat - auch als Calciumhydroxid bezeichnet - entsteht durch eine Reaktion von gebranntem Kalk mit Wasser- Als Kalkhydrat ist auch Weißkalkhydrat verwendbar.

Darüber hinaus ist Wasser Bestandteil des Putzes. Je nach Feuchte des verwendeten Sandes kommen auf ungefähr 58 kg der Zusammensetzung sechs bis sieben Liter Wasser.

Weiterer Bestandteil ist eine Mischung, die Zinkseife, einen Luftporenbildner und eine Mineralstoffmischung enthält. Der Luftporenbildner ist bevorzugt Olefinsulfonat. Die Mineralstoffmischung setzt sich zusammen aus Kieselsäure (SiO, SiO₃), Aluminiumoxid (Al₂O₃), Kaliumoxid (K₂O), Eisenoxid (Fe₂O₃), Calciumoxid (CaO), Magnesiumoxid (MgO), Natrium (Na), Mangan (Mn), Kupfer (Cu), Zink (Zn), Kobalt (Co), Bor (B), Chrom (Cr), Nickel (Ni) und Vanadium (V). Bei einer Putzauftragsstärke von 0,5 bis 5 cm benötigt man pro Kilogramm Trockenmischung des Putzes 5 bis 7g der Mischung.

Der erfindungsgemäße Putz lässt sich in einem Arbeitsschritt bis zu 5 cm dick auftragen. Aufgrund der Zusammensetzung treten sowohl beim Auftragen als auch beim Austrocknen keine Risse und keine Schwindrisse auf. Dagegen ist es bei bekannten Putzen erforderlich, bis zu vier Schichten auf die Bauflächen aufzutragen, wobei zwischen die einzelnen Schichten Kieselsäure aufgetragen werden musste, die auf den Putz aufgesprüht wird, um ein besseres Abbinden und ein Beschleunigen des Aushärtens zu gewährleisten. Der erfindungsgemäße Putz ist
auf trockenes wie feuchtes Mauerwerk, im Keller sowie an anderen Baukörpern innen wie außen auftragbar. Er lässt sich auf Bruchstein-, Ziegel-, Beton- oder Kalksandstein-Mauerwerk auftragen. Der erfindungsgemäße Putz bindet schnell ab; er ist nach ca. achtundzwanzig Stunden abgebunden, nach ca. zehn Tagen komplett trocken bei einer Gewichtsfeuchte von ca. 1,5 % (Wassergehalt in Gewichtsprozenten) und atmungsaktiv. Er hat nach der Austrocknung einen Luftporenanteil von 15 bis 25 %. Selbst bei 80 bis 100 % Mauerwerksfeuchte trocknet der erfindungsgemäße Putz komplett aus, wogegen bekannte Putze in diesem Anwendungsfall dauerfeucht bleiben. Der Putz ist bis 1,5 bar wasserdruckdicht und frostsicher. Aufgrund der verwendeten Materialien liegt eine Materialkostenersparnis von ca, 80 % vor. Darüber hinaus ergibt sich aufgrund der schnellen Wirkung des erfindungsgemäßen Putzes eine Lohnkostenersparnis von ca. 60 bis 80 %. Die jeweilige Baustelle kann schneller abgewickelt werden. Es ist eine schnellere Nutzung der sanierten Flächen möglich. Da der Putz atmungsaktiv ist, ist er auch in Wohnräumen einsetzbar. Es ergeben sich folglich vielfältige Einsatzmöglichkeiten innen und außen.

## Patentansprüche

1. Verwendung einer Mörtelmischung, bestehend aus
• Sand,
• Zement
• Kalkhydrat
• Wasser und einer
• Mischung, die
- Zinkseife,
- Luftporenbildner und eine
- Mineralstoffmischung aus Kieselsäure, Aluminiumoxid, Kaliumoxid, Eisenoxid, Calciumoxid, Magnesiumoxid, Natrium, Mangan, Kupfer, Zink, Kobalt, Bor, Chrom, Nickel und Vanadium umfasst,
zur Herstellung eines atmungsaktiven wassersperrenden Putzes.

2. Verwendung nach Anspruch 1, **dadurch gekennzeichnet, dass** als Sand Rheinsand und/oder Putzsand verwendet wird.

3. Verwendung nach Anspruch 1 oder 2, **dadurch gekennzeichnet, dass** als Kalkhydrat Weißkalkhydrat verwendet wird.

4. Verwendung nach einem der Ansprüche 1 bis 3, **dadurch gekennzeichnet**, als Luftporenbildner Olefinsulfonat verwendet wird.

5. Verwendung nach einem der Ansprüche 1 bis 4, **dadurch gekennzeichnet**, als Zement Portlandzement verwendet wird.

## Claims

1. Application of a mortar mixture consisting of
- sand
- cement
- lime hydrate
- water and a
- mixture consisting of
- zinc soap
- air-entraining agents and a
- mixture of minerals containing silicic acid, aluminium oxide, potassium oxide, iron oxide, calcium oxide, magnesium oxide, sodium, manganese, copper, zinc, cobalt, borium, chromium, nickel and vanadium
for manufacturing a cellular-breathing watertight plaster (for sealing porous construction surfaces).

2. Application according to claim 1, **characterised in that** the sand used is Rhine or abrasive sand.

3. Application according to claim 1 or 2, **characterised in that** the lime hydrate used is white-lime hydrate.

4. Application according to one of the claims 1 to 3, **characterised in that** olefin sulfonate is used as the air-entraining agent.

5. Application according to one of the claims 1 to 4, **characterised in that** the cement used is Portland cement.

## Revendications

1. Utilisation d'un mélange constitutif d'un mortier, composé de ceci
• Sable
• Ciment
• Hydrate de chaux
• Eau et un
• Mélange comprenant du
- Savon de zinc, un
- Agent générateur de pores et un
- Mélange de matières minérales formé d'acide silicique, oxyde d'aluminium, oxyde de potassium, oxyde de fer, oxyde de calcium, oxyde de magnésium, sodium, manganèse, cuivre, zinc, cobalt, bore, chrome, nickel et vanadium,
dans le but de confectionner un enduit respirant faisant barrage à l'eau.

2. Utilisation selon la revendication 1, **caractérisée en ce que** le sable utilisé est du sable du Rhin et/ou du sable pour enduit.

3. Utilisation selon la revendication 1 ou 2, **caractérisée en ce que** l'hydrate de chaux utilisé est de l'hydrate de chaux blanc.

4. Utilisation selon l'une des revendications 1 à 3, **caractérisée en ce que** l'agent générateur de pores utilisé est du sulfonate d'oléfine.

5. Utilisation selon l'une des revendications 1 à 4, **caractérisée en ce que** le ciment utilisé est du ciment de Portland.
